(19) Europäisches Patentamt
European Patent Office
Office européen des brevets

(11) EP 3 850 019 B1

(12) **FASCICULE DE BREVET EUROPEEN**

(45) Date de publication et mention de la délivrance du brevet:
**21.09.2022 Bulletin 2022/38**

(21) Numéro de dépôt: **19791315.5**

(22) Date de dépôt: **09.09.2019**

(51) Classification Internationale des Brevets (IPC):
***B33Y 70/00*** *(2020.01)* ***C08F 220/30*** *(2006.01)*
***C08F 222/10*** *(2006.01)* ***C09D 4/00*** *(2006.01)*
***G02B 1/04*** *(2006.01)*

(52) Classification Coopérative des Brevets (CPC):
(C-Sets disponibles)
**C08F 220/30; B33Y 70/00; C08F 222/1006; C09D 4/00; G02B 1/041;** C08F 222/106 (Cont.)

(86) Numéro de dépôt international:
**PCT/FR2019/052069**

(87) Numéro de publication internationale:
**WO 2020/053512 (19.03.2020 Gazette 2020/12)**

(54) **COMPOSITIONS RÉTICULABLES AYANT UNE FAIBLE VISCOSITÉ POUR REVÊTEMENTS ET MATERIAUX À HAUT INDICE DE RÉFRACTION ET À TEMPÉRATURE DE DÉFLEXION THERMIQUE ÉLEVÉE**

NIEDRIGE VISKOSITÄTSVERNETZBARE ZUSAMMENSETZUNGEN FÜR BESCHICHTUNGEN UND MATERIALIEN MIT EINEM HOHEN BRECHUNGSINDEX UND EINER HOHEN THERMISCHEN VERFORMUNGSTEMPERATUR

LOW-VISCOSITY CROSSLINKABLE COMPOSITIONS FOR COATINGS AND MATERIALS HAVING A HIGH REFRACTIVE INDEX AND A HIGH THERMAL DEFLECTION TEMPERATURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.09.2018 FR 1858126**

(43) Date de publication de la demande:
**21.07.2021 Bulletin 2021/29**

(73) Titulaire: **ARKEMA FRANCE**
**92700 Colombes (FR)**

(72) Inventeur: **MONNIER, Guillaume**
**60550 Verneuil-en-Halatte (FR)**

(74) Mandataire: **Arkema Patent**
**Arkema France**
**DRD-DPI**
**420, rue d'Estienne d'Orves**
**92705 Colombes Cedex (FR)**

(56) Documents cités:
**EP-A1- 2 586 802** **EP-A1- 2 664 635**
**US-A1- 2006 069 222**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

(52) Classification Coopérative des Brevets (CPC): (Cont.)

C-Sets
**C08F 220/30, C08F 222/1025, C08F 222/1045, C08F 222/102, C08F 220/20;**
**C08F 220/30, C08F 222/1045, C08F 222/1025, C08F 222/102;**
**C08F 220/30, C08F 222/1045, C08F 222/1025, C08F 222/102, C08F 220/20;**
**C09D 4/00, C08F 222/1045;**
**G02B 1/041, C08L 33/08;**
**G02B 1/041, C08L 33/10;**
**G02B 1/041, C08L 75/16;**
C08F 222/1045, C08F 220/30, C08F 222/1025, C08F 220/20

## Description

La présente invention concerne une composition (formulation) réticulable, en particulier photoréticulable, ayant une faible viscosité à l'usage qui convient pour la réalisation de revêtements ou de matériaux 3D à haut indice de réfraction (IR) et à haute température de déflexion thermique (HDT), en particulier convenable pour la fabrication d'objets imprimés 3D pour applications optiques.

Il existe déjà des formulations réticulables et en particulier photoréticulables pour objets optiques mais celles-ci ne conviennent pas pour la fabrication d'objets optiques par impression 3D, laquelle requiert des propriétés physico-chimiques particulières. Il existe également des formulations photoréticulables pour impression 3D mais qui ne conviennent pas pour des applications optiques ou ne satisfont pas les performances requises pour des applications optiques. Il y a donc un besoin de nouvelles compositions pour applications optiques qui peuvent être imprimées en 3D pour la réalisation d'objets (articles) tridimensionnels. Parmi les performances requises pour l'impression 3D d'objets optiques, les compositions réticulables de la présente invention doivent satisfaire au moins aux critères importants suivants non remplis par celles connues de l'état de la technique :

- viscosité à l'utilisation (25°C étant prise commetempérature de référence) inférieure à 5000 mPa.s, de préférence inférieure à 2500 mPa.s, plus préférentiellement inférieure à 1500 mPa.s,
- une température de déflexion thermique (HDT) selon la méthode ISO 75 (2004) après réticulation, d'au moins 70°C et de préférence supérieure à 80°C,
- un indice de réfraction (IR) avant réticulation selon la norme ASTM 1218-02 d'au moins 1,47, de préférence supérieur à 1,52 et plus particulièrement supérieur à 1,56 et après réticulation d'au moins 1,50, de préférence supérieur à 1,55 et plus particulièrement supérieur à 1,59.

Plus particulièrement, les formulations réticulées doivent avoir un module de Young à 25°C selon la méthode ISO 527 (1995) d'au moins 1800 MPa, de préférence d'au moins 2000 MPa.

EP 2 586 802 B1 décrit une composition réticulable sous rayonnement par voie radicalaire convenable pour des lentilles à haut indice de réfraction et comprenant comme composants essentiels un phényl benzyl (méth)acrylate et un uréthane (méth)acrylate aromatique. La présence de tétra(méth)acrylate de diglicydyle éther de bisphénol A n'est ni décrite ni suggérée par ce document.

EP 2 664 635 B1 concerne le même domaine d'application que le document cité ci-avant et décrit une composition réticulable sous rayonnement par voie radicalaire convenable pour lentilles à haut indice de réfraction et comprenant comme composants essentiels du phényl benzyl (méth)acrylate avec un ratio limité entre isomères o- et p- du benzyl phényl (méth)acrylates, comprenant en outre un époxy (méth)acrylate de structure aromatique. La présence de tétra(méth)acrylate de diglycidyle éther de bisphénol A halogéné n'est ni décrite ni suggérée non plus par ce document.

EP 2 684 903 B1 décrit des compositions similaires pour le même usage avec présence d'un composant phényl benzyl (méth)acrylate avec un ratio spécifique entre isomères o- et p- et la présence d'un deuxième composant (méth)acrylate comprenant dans sa structure des biphényles liés par un méthylène, ladite composition ne comprenant pas d'uréthane (méth)acrylate. La présence de tétra(méth)acrylate de diglicydyle éther de bisphénol A halogéné n'est pas non plus décrite ni suggérée par ce document.

Le 1$^{er}$ objet de l'invention concerne donc une composition réticulable comprenant deux composants essentiels a) et b) comme définis ci-dessous et en option d'autres composants c), d), e), f) et g) comme définis ci-dessous.

Un autre objet de l'invention concerne l'utilisation de ladite composition pour la réalisation de revêtements et de matériaux à haut IR et haute HDT.

La composition réticulée fait également partie de l'invention comme un produit fini résultant de la réticulation de ladite composition ou comprenant ladite composition réticulée.

Le premier objet de l'invention concerne donc une composition (aussi appelée formulation pour cette invention) réticulable qui comprend un composant a) au moins un tétra(méth)acrylate de diglycidyle éther de bisphénol A halogéné (appelé aussi par la suite par le raccourci « tétra(méth)acrylate de bisphénol A halogéné ») et un composant b) au moins un diluant parmi les mono(méth)acrylates d'un monoalcool comprenant une structure biphényle, ledit biphényle étant optionnellement halogéné,
et en option au moins un composant choisi parmi les composants c), d), e), f) et g) tels que définis comme suit ou leurs combinaisons :

c) au moins un oligomère (méth)acrylé porteur d'au moins 4 fonctions (méth)acrylates par chaîne (tétra(méth)acrylate), avec ledit oligomère comprenant au moins 2 unités de structure bisphénol A halogéné dans ladite chaîne oligomère, en particulier lesdites au moins 2 unités de structure bisphénol A halogéné étant liées par un groupement éther,

d) au moins un di(méth)acrylate d'un dérivé époxydé de biphényle, optionnellement ledit biphényle étant halogéné,

e) un di(méth)acrylate du diglycidyle éther de bisphénol A optionnellement halogéné,

f) au moins un monomère différent de a), b), d) et e),

g) au moins un oligomère parmi les structures uréthane (méth)acrylate, polyester (méth)acrylate et polyéther (méth)acrylate.

Concernant les composants optionnels c) à g), ils peuvent être présents dans ladite composition soit chacun seul en combinaison avec les composants a) et b) tels que définis ci-haut, soit en combinaison avec un ou plusieurs autres composants parmi les composants c) à g).

Le taux en poids de chaque composant a) à g) peut être défini par rapport au poids des composants a) + b). Ce taux en poids peut être converti en % en poids par rapport au poids total de la composition. Par exemple, si le % en poids du composant c) par rapport à a) + b) dans une composition a) + b) + c) est égal à x, dans ce cas le % en poids X par rapport au poids total de la composition a) + b) + c) peut être calculé selon la formule suivante :

$$X = 100\,x / (100 + x)$$

La somme des % en poids ainsi calculés des composants présents a) et b) et en option de c) à f) par rapport au poids total de la composition doit être égale à 100%.

Par exemple, si le taux en poids de a) par rapport au poids de a) + b) est de 60% et le taux de en poids de c) dans une composition a) + b) + c) par rapport à a) + b) est défini comme étant de 30%, dans ce cas le % en poids de c) par rapport au poids de a) + b) + c) sera de 100 × 30 / (100 + 30) = 3000/130 = 23,08% avec % de a) = 60 × 100 / 100 + 30 = 46,15% et le % de b) (complément de a) dans 100 parties de a) + b) est de 40% vs a) + b)) est de 40 ×100 / 130 = 30,77% avec somme de % a) + b) + c) = 23,08 + 46,15 + 30,77 = 100%.

Concernant les composants halogénés a), c), et e) et optionnellement halogéné b) et d), c'est la structure aromatique impliquée (noyaux aromatiques) qui est halogénée avec substitution de 1 à 2 hydrogènes de chaque cycle aromatique par un nombre équivalent d'atomes d'halogène. Dans le cas du composant a) tétra(méth)acrylate du bisphénol A halogéné, les atomes d'halogène sont portés par les deux noyaux aromatiques de la structure bisphénol A (1 ou 2, de préférence 2, atomes d'halogène par noyau aromatique de la structure bisphénol A).

Dans le cas du composant b) avec le groupement biphényle optionnellement halogéné, dans ce cas ce sont les noyaux aromatiques du biphényle qui portent lesdits atomes d'halogène (1 ou 2 atomes d'halogène par noyau aromatique). Le même principe est valable dans le cas du biphényle optionnellement halogéné du composant d).

Concernant le composant c) qui est à base d'une structure oligomère dérivée du bisphénol A, ledit oligomère tétra(méth)acrylé comprend dans sa chaîne au moins deux unités de structure biphénol A liés par un pont éther, ce qui signifie dans ce cas que le composant halogéné c) comprend au moins deux atomes d'halogène de plus par molécule ou par chaîne que le composant a) et avec au moins 4 noyaux aromatiques halogénés pour 2 unités de structure bisphénol A halogénés (avec 1 ou 2 atomes d'halogène par noyau aromatique).

Selon une option particulière, ledit oligomère tel que défini selon le composant c) comprend 2 unités de structure bisphénol A halogéné dans ladite chaîne oligomère. Ceci signifie, selon cette option particulière, que 4 noyaux aromatiques sont halogénés (avec 1 ou 2 atomes d'halogène par noyau aromatique).

Les composants (meth)acrylés halogénés a), c) et e) et optionnellement halogénés b) et d) peuvent être obtenus par (méth)acrylation des composés halogénés époxydes correspondants pour composants a), c) et e) ou d'un époxyde correspondant optionnellement halogéné pour composant d) et par (méth)acrylation de l'alcool correspondant optionnellement halogéné pour le composant b).

Le tétra(méth)acrylate du bisphénol A halogéné a), en particulier dihalogéné ou tétrahalogéné (signifiant portant 1 ou 2 atomes d'halogène par noyau aromatique et de préférence tétrahalogéné avec 2 halogènes par noyau aromatique) peut être préparé par estérification du diglycidyl éther de Bisphénol A (DGEBA) halogéné soit avec l'acide (méth)acrylique en deux étapes soit en une étape avec l'anhydride (méth)acrylique avec d'abord réaction des groupements époxydes par ouverture du cycle oxirane, avec formation d'un premier groupement ester (méth)acrylique et d'un groupement hydroxyle secondaire, lequel après (méth)acrylation complète (vs OH secondaire) conduit au composant tétra(méth)acrylé de DGEBA halogéné. Le poids moléculaire (ou masse molaire) du composant a) est de préférence inférieur à 1100 g/mol. Les précurseurs DGEBA halogénés sont disponibles commercialement avec par exemple un dérivé tétrabromé du DGEBA étant commercialisé sous la référence DER 542 par OLIN. Des conditions détaillées similaires de (méth)acrylation par l'anhydride (méth)acrylique d'un DGEBA pour préparer le tétra(méth)acrylate de DGEBA sont décrites déjà dans US 6,515,166 et peuvent donc être appliquées au dérivé halogéné de DGEBA.

Plus particulièrement, le composant a) est le tétraméthacrylate de diglycidyle éther de bisphénol A tétrabromé de formule suivante (I) :

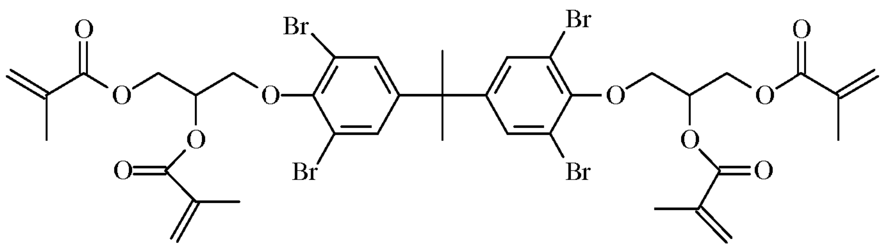

(I)

Il résulte de la méthacrylation complète du diglycidyle Bisphénol A tétrabromé (DER 542 commercialisé par OLIN) par l'anhydride méthacrylique. La méthacrylation complète signifie la méthacrylation par groupement glycidyle terminal, à la fois du groupement oxirane (époxy) dudit glycidyle et aussi du groupement hydroxyle secondaire formé lors de l'ouverture dudit cycle oxirane.

Concernant le composant b), il peut être préparé par (méth)acrylation par l'acide (méth)acrylique ou par l'anhydride (méth)acrylique d'un monoalcool comprenant une structure biphényle qui optionnellement peut être halogénée. Comme exemple de monoalcool pouvant être (méth)acrylé pour obtenir le mono(méth)acrylate tel que défini selon b), on peut citer le biphényl-4 méthanol qui peut être dihalogéné ou tétrahalogéné et en particulier dibromé ou tétrabromé.

Plus particulièrement, ledit composant b) est le mono(méth)acrylate de biphényle méthanol de formule suivante (II) :

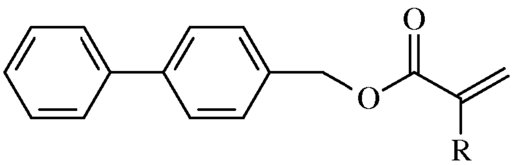

(II)

avec R étant méthyle ou H, de préférence H.

Il est préparé par la (méth)acrylation du biphényle 4-méthanol.

Concernant le composant c) oligomérique, qui est un tétra(méth)acrylate d'un oligomère comprenant au moins 2 unités de structure bisphénol A halogéné dans ladite chaîne oligomère, en particulier avec un pont éther liant lesdites unités de structure bisphénol A, il peut être préparé par une méthode analogue à celle pour le composant a), par (méth)acrylation complète d'un précurseur oligomère diglycidyle éther (groupements glycidyles terminaux), ledit oligomère comprenant dans sa chaîne oligomère au moins 2 unités de structure bisphénol A halogéné, en particulier lesdites unités bisphénol A étant liées entre elles par un pont éther. Le composant oligomère c) a de préférence une masse molaire (ou poids moléculaire) supérieure à 1400 g/mol. Ladite (méth)acrylation peut se faire par l'acide (méth)acrylique ou par l'anhydride (méth)acrylique, le dernier étant un agent de (méth)acrylation plus rapide. En fait, la (méth)acrylation complète signifie la (méth)acrylation du groupement époxy (oxirane) dudit glycidyle et du groupement hydroxyle (OH) secondaire formé après réaction par ouverture du cycle époxy (oxirane), lequel (OH) est également (méth)acrylé avec ainsi, deux groupements (méth)acrylates incorporés par groupement glycidyle initial terminal pour former finalement ledit tétra(méth)acrylate d'oligomère comprenant au moins deux unités bisphénol A halogéné. Suivant que l'oligomère précurseur diglycidyle éther est dihalogéné, de préférence dibromé, ou tétrahalogéné, de préférence tétrabromé, sur l'unité de structure bisphénol A, ledit oligomère tétra(méth)acrylate c) aura des unités bisphénol A dihalogénées ou tétrahalogénées, de préférence dibromées ou tétrabromées. Un exemple particulier de précurseur oligomère diglycidyle éther avec deux unités de bisphénol A tétrahalogénées liées par un pont éther et convenable pour la préparation d'un oligomère tel que défini selon c) ci-haut, est l'oligomère à base de bisphénol A tétrabromé commercialisé sous référence DER 560 par OLIN. Plus particulièrement, ledit oligomère c) est de formule idéale (III) suivante :

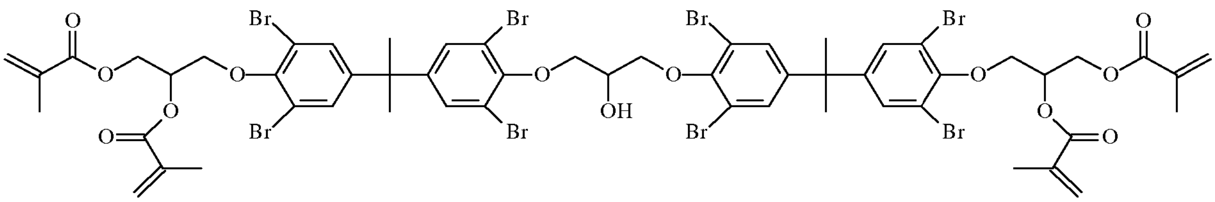

(III)

L'oligomère c) de formule (III) résulte de la méthacrylation complète avec l'anhydride méthacrylique de chacun de deux groupements terminaux glycidyle d'un précurseur oligomère tétrabromé comme le produit commercialisé par OLIN sous référence DER 560.

Concernant le composant d), qui est un di(méth)acrylate comprenant une structure biphényle optionnellement halogénée, il est préparé également par (méth)acrylation par l'acide (méth)acrylique ou par l'anhydride (méth)acrylique d'un précurseur époxydé comprenant une structure biphényle porteuse d'un groupement époxydé (porteur d'un groupement oxirane). Suivant que ledit précurseur époxydé est halogéné, ledit composant d) di(méth)acrylate le sera également. Ledit biphényle peut être monohalogéné, en particulier monobromé, ou dihalogéné, en particulier dibromé.

Selon un mode de réalisation particulier de la composition réticulable selon l'invention, ledit di(méth)acrylate de dérivé époxydé de biphényle tel que défini selon d) est un di(méth)acrylate de biphénylyle glycidyle éther optionnellement halogéné. Un di(méth)acrylate de biphénylyle glycidyle éther optionnellement halogéné peut notamment être représenté par la formule suivante (IVa) :

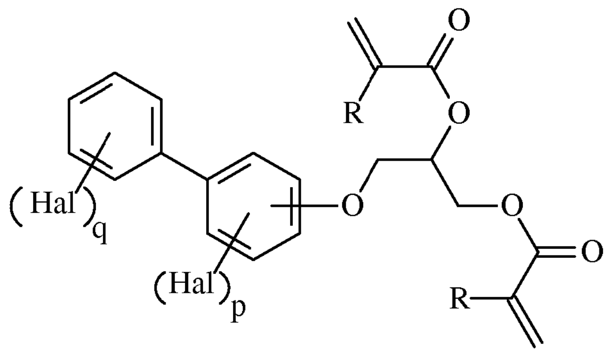

(IVa)

dans laquelle chaque R est indépendamment H ou méthyle ;
chaque Hal est indépendamment un atome d'halogène ;
p et q sont indépendamment 0, 1 ou 2.

Plus particulièrement, le di(méth)acrylate de dérivé époxydé de biphényle tel que défini selon d) est le di(méth)acrylate du 2-biphénylyle glycidyle éther. Le di(méth)acrylate du 2-biphénylyle glycidyle éther peut notamment être représenté par la formule suivante (IVb) :

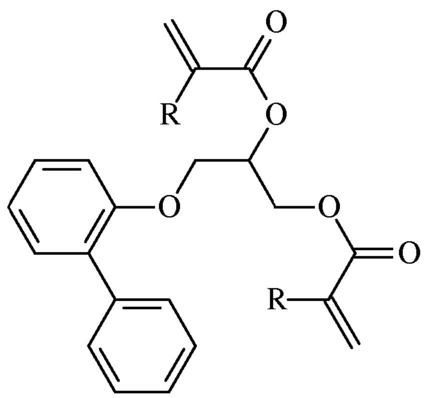

(IVb)

dans laquelle chaque R est indépendamment H ou méthyle.

Selon une option plus particulière de la composition réticulable selon l'invention, ledit di(méth)acrylate de dérivé époxydé de biphényle tel que défini selon d) est le diméthacrylate du 2-biphénylyle glycidyle éther, comme défini selon la formule suivante (IVc) :

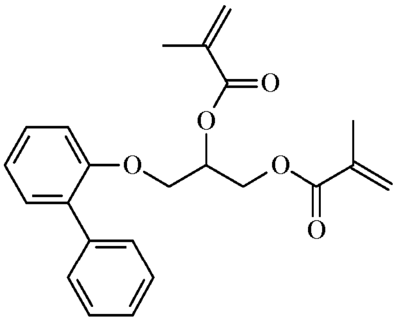

(IVc)

Le di(méth)acrylate du bisphénol A optionnellement halogéné e), en particulier di halogéné ou tétrahalogéné (signifiant portant 1 ou 2 atomes d'halogène par noyau aromatique et de préférence tétrahalogéné avec 2 atomes d'halogène par noyau aromatique) peut être préparé par estérification du diglycidyle éther de Bisphénol A (DGEBA) halogéné avec l'acide (méth)acrylique en une étape par ouverture du cycle oxirane, avec formation d'un groupement ester (méth)acrylique et d'un groupement hydroxyle secondaire qui conduit au composant di(méth)acrylé de DGEBA optionnellement halogéné. Le poids moléculaire (ou masse molaire) du composant e) est de préférence inférieur à 1100 g/mol.

Ledit monomère f) tel que défini dans la composition selon l'invention a une fonctionnalité en (méth)acrylates allant de 1 à 6 et de préférence, il est sélectionné parmi les esters mono(méth)acryliques d'alcools aliphatiques en C1 à C18 ou d'alcools cycloaliphatiques en C6 à C18 ou parmi les esters (méth)acryliques multifonctionnels (de fonctionnalité 2 à 6) de polyols en C2 à C18, en particulier parmi les esters (méth)acryliques multifonctionnels de polyols en C3 à C18 ou parmi les hydroxy alkyl (méth)acrylates, en particulier les hydroxy C2-C6 alkyl (méth)acrylates, les époxy(méth)acrylates, les aminoacrylates et les uréthane (méth)acrylates et en option ledit monomère f) comprend au moins une unité de structure alkoxy.

Comme exemples convenables de monoesters (méth)acryliques d'alcools aliphatiques en C1 à C18, on peut citer les mono(méth)acrylates d'alcanols en C1 à C18, tels que le (méth)acrylate de méthyle, d'éthyle, de propyle, de butyle, de pentyle, d'hexyle, d'heptyle, d'octyle, de 2-éthyl hexyle, de nonyle, de décyle, de lauryle, de stéaryle et de tous leurs isomères quand plusieurs isomères sont possibles pour un alcanol, ledit alcanol pouvant être alcoxylé avec 1 à 5 unités alkoxy parmi éthoxy et/ou propoxy. Comme monoesters (méth)acryliques d'alcools cycloaliphatiques en C6 à C18, on peut citer le (méth)acrylate du cyclohexanol et de ses dérivés substitués sur le cycle en C6, le (méth)acrylate d'isobornyle, le (méth)acrylate d'isophoronyle, le (méth)acrylate de dicyclopentadienyle, lesdits (méth)acrylates pouvant être alcoxylés (à partir de cycloalcanols alcoxylés) comme les (méth)acrylates desdits alcanols.

Comme esters (méth)acryliques multifonctionnels de polyols en C2 à C18 convenables comme composant f) de la composition selon l'invention, on peut citer le di(méth)acrylate d'éthylène glycol, le di(méth)acrylate de diéthylène glycol, le di(méth)acrylate de triéthylène glycol, le di(méth)acrylate de propylène glycol, le di(méth)acrylate de dipropylène glycol, le di(méth)acrylate de butylène glycol, le di(méth)acrylate de pentane diol, le di(méth)acrylatede néopentyl glycol, le di(méth)acrylate d'hexane diol, le di(méth)acrylate de cyclohexane diol, le di(meth)acrylate de tricyclodecanedimethanol, le tri(méth)acrylate de glycérol, le tri(méth)acrylate de triméthylol propane, le tétra(méth)acrylate de di(triméthylol propane)éther, le tétra(méth)acrylate de pentaérythritol, l'hexa(méth)acrylate de di(pentaérythritol) éther.

Comme monomères hydroxy alkyl (méth)acrylates convenables comme composant f), on peut citer les monohydroxy esters (méth)acryliques de polyols de fonctionnalité en OH au départ allant de 2 à 6 et plus particulièrement de 2. Dans le cas de diols, il s'agit de monohydroxy monoesters (méth)acryliques. Dans le cas de polyols de fonctionnalité supérieure à 2 (3 à 6), lesdits monohydroxy esters (méth)acryliques peuvent comporter en plus de la fonction hydroxy de 2 à 5 fonctions (méth)acrylates pour une fonction hydroxy. De préférence, lesdits hydroxy alkyl (méth)acrylates sont des monohydroxy monoesters (méth)acryliques d'un diol d'alkylène en C2 à C6 et plus préférentiellement, il s'agit d'hydroxy éthyl (méth)acrylate, d'hydroxy propyl (méth)acrylate ou d'hydroxy butyl (méth)acrylate.

Une autre catégorie particulière de monomères (méth)acryliques de fonctionnalité de 1 à 6 pouvant convenir comme monomère f) dans la composition selon l'invention est la catégorie d'époxy (méth)acrylates. Ces monomères, s'ils ne sont pas alkoxylés, peuvent être préparés par l'estérification par l'acide (méth)acrylique d'un composé époxydé précurseur du monomère époxy (méth)acrylate visé, avec ledit précurseur époxydé ayant une fonctionnalité en groupements époxy (oxirane) identique à la fonctionnalité en (méth)acrylates du monomère époxy (méth)acrylate visé. Une telle (méth)acrylation avec ouverture du cycle oxirane conduit à un groupement ester (méth)acrylique et un groupement OH secondaire pour chaque groupement oxirane ayant réagi. Dans le cas d'époxy (méth)acrylates alcoxylés, l'alcoxylation est faite directement sur le composé époxydé avec formation de pont éther entre l'oxirane terminal du composé époxydé et l'oxyde d'alkylène (oxyde d'éthylène et/ou oxyde de propylène) utilisé comme agent d'alcoxylation conduisant pour un précurseur époxydé diépoxydé comme le diglycidyle éther de bisphénol A à un diol alcoxylé du diglycidyl éther

de bisphénol A, lequel peut être (méth)acrylé par estérification avec l'acide (méth)acrylique, obtenant dans le cas du dérivé alcoxylé du diglycidyle éther de bisphénol A, le di(méth)acrylate alcoxylé du diglycidyle éther de bisphénol A (par exemple avec 1 à 10 unités d'éthoxy et/ou de propoxy).

Comme autres monomères convenables comme composant f) dans la composition selon l'invention comme définie ci-dessus, il y a la catégorie des amino-acrylates de fonctionnalité allant de 1 à 5. Ces monomères comprennent un groupement aminoacrylate =N-CH2-CH2 qui résulte de la réaction de Michael par addition d'un groupement =NH d'une amine sur un monomère acrylate multifonctionnel de fonctionnalité allant de 2 à 6 avec les groupements amines =NH étant en défaut par rapport aux groupements acrylates de sorte qu'il y ait au moins un groupement acrylate par molécule d'acrylate multifonctionnel de départ, non saturé par lesdits groupements amines. L'amine utilisée est de préférence une monoamine et en particulier secondaire, pouvant comprendre un groupement d'amine tertiaire (non réactive par addition de Michael).

Une autre catégorie de monomères convenables comme monomère f) dans la composition selon l'invention est la catégorie des monomères uréthanes (méth)acrylates. Il s'agit de monomères qui résultent de la réaction d'un monoisocyanate ou d'un polyisocyanate aliphatique, cycloaliphatique ou aromatique avec des hydroxy alkyl (méth)acrylates, de préférence avec ledit alkyl étant en C2 à C6. Selon une option particulière de la composition selon l'invention, ledit monomère f) comprend une ou plusieurs unités alkoxy, de préférence choisies parmi éthoxy, propoxy, butoxy ou parmi leurs mélanges.

Concernant ledit oligomère uréthane (méth)acrylate, polyester (méth)acrylate ou polyéther (méth)acrylate dans ledit composant g), il peut avoir une fonctionnalité (méth)acrylate allant de 1 à 15. Ledit oligomère a une masse moléculaire moyenne en nombre Mn qui est supérieure à 600 et de préférence d'au moins 800, plus préférentiellement d'au moins 1000. La Mn est déterminée par GPC en équivalents polystyrène dans le THF.

Les oligomères uréthane (méth)acrylates selon g) peuvent être obtenus par exemple, à partir d'un polyisocyanate, un hydroxyalkyl (méth)acrylate avec alkyl en C2-C4 et d'un polyol oligomère, en particulier diol oligomère, ledit oligomère étant choisi parmi polyester polyols, en particulier diols, polyéthers polyols, en particulier diols ou polyols d'alkylènes alkoxylés et en particulier diols d'alkylènes alkoxylés ou parmi les polycarbonates polyols et en particulier diols.

Les polyesters (méth)acrylates selon g) sont obtenus à partir de la (méth)acrylation partielle ou totale de polyols polyesters (avec fonctionnalité correspondante en OH permettant la fonctionnalité (méth)acrylate finale après (méth)acrylation) qui résultent de la polycondensation d'un polyol avec un polyacide avec élimination de l'eau d'estérification. En particulier, les polyesters diols résultent de la polycondensation d'un diacide. Les polyesters diols peuvent également résulter de la polymérisation d'une lactone cyclique comme la caprolactone. Ils peuvent être de structure aliphatique, cycloaliphatique ou aromatique ou de structure mixte suivant la structure des composants précurseurs diacides et diols.

Les polyéthers (méth)acrylates selon g) résultent de la (méth)acrylation de polyols polyéthers (ayant une fonctionnalité OH convenable permettant la fonctionnalité finale visée en (méth)acrylates). Les oligomères polyéthers polyols utilisables pour cette (méth)acrylation peuvent être des polyoxyéthylene polyols, polyoxypropylène polyols des copolymères statistiques ou en bloc polyoxyéthylène-polyoxypropylène ou des polyoxytéthaméthylènes (polytétrahydrofuranes ou polyTHF).

Concernant lesdits composants halogénés a, c) et e) ou optionnellement halogénés b) et d), plus particulièrement, ils comprennent un halogène sélectionné parmi le brome, le chlore et le fluor et de préférence le brome. Plus particulièrement, ils ont un nombre d'atomes d'hydrogène du noyau aromatique desdits composés halogénés ou optionnellement halogénés, substitués par un halogène, qui varie de 1 à 2 par noyau aromatique dudit composant halogéné ou optionnellement halogéné et de préférence ledit nombre est de 2 atomes d'hydrogène substitués par un halogène par noyau aromatique dudit composant.

La composition selon l'invention a un taux en poids du composant a) par rapport au poids a) + b) qui peut varier de 20 à 80% et de préférence de 35 à 65%.

Concernant le taux en poids dudit composant c) par rapport au poids a) + b), il peut varier de 0 à 50% et de préférence de 5 à 35%.

Concernant le taux en poids du composant d) par rapport au poids a) + b), il peut varier de 0 à 50% et de préférence de 5 à 35%.

Concernant le taux en poids du composant e) par rapport au poids a) + b), il peut varier de 0 à 50% et de préférence de 5 à 30%.

Concernant le taux en poids du composant f) par rapport au poids a) + b), il peut varier de 0 à 50% et de préférence de 5 à 35%.

Concernant le taux en poids du composant g) par rapport au poids a) + b), il peut varier de 0 à 40%, de préférence de 10 à 30%.

Selon une option particulière, la composition selon l'invention peut comprendre en plus de a) et b) et en option de c) à g), au moins un amorceur.

Ledit amorceur peut être sélectionné parmi un peroxyde ou hydroperoxyde et dans ce cas ladite composition de l'invention est réticulable par voie thermique ou à basse température en présence d'un accélérateur réducteur dudit peroxyde ou hydroperoxyde. Comme accélérateur réducteur dudit peroxyde ou hydroperoxyde accélérant sa décomposition à basse température (en particulier à l'ambiante : 15-25°C), on peut utiliser une amine tertiaire.

En option alternative, la composition de la présente invention peut comprendre un amorceur qui est au moins un photoamorceur et dans ce cas ladite composition selon l'invention est réticulable par rayonnement UV y compris proche UV visible, de préférence par lampe UV visible ou proche UV visible, par laser ou par LED, de préférence lampe proche UV visible. La plage des longueurs d'ondes qui correspond au rayonnement proche UV visible va de 355 à 415 nm et celle qui correspond à l'UV visible de 400 à 800 nm.

Selon une autre option alternative, la composition selon l'invention ne comprend aucun amorceur et dans ce cas elle n'est réticulable que par rayonnement EB (c'est-à-dire par faisceau d'électrons).

Selon une autre alternative, la composition de l'invention est réticulable par voie duale, ce qui signifie qu'elle combine au moins deux techniques de réticulation telles que définies ci-haut comme autres voies alternatives. Comme exemples de voies duales sous cette définition alternative, on peut citer la combinaison d'une voie basée sur la présence d'un peroxyde/hydroperoxyde avec celle où au moins un photoamorceur est présent. Dans un tel cas, on peut réticuler la composition soit en simultané soit en étapes successives par voie thermique ou basse température en présence de peroxyde/hydroperoxyde et par voie sous rayonnement UV avec la présence supplémentaire d'un photoamorceur. Par exemple, une réticulation rapide par voie UV en présence de photoamorceur peut être suivie par une réticulation supplémentaire par voie thermique du fait de la présence d'un peroxyde/hydroperoxyde avec ledit photoamorceur, permettant ainsi de parfaire/compléter la réticulation, en particulier à une température supérieure à celle de la réticulation UV. Ceci peut être en particulier intéressant quand la température de transition vitreuse de la composition complétement réticulée est supérieure à celle de la température de réticulation UV.

Comme exemples de peroxydes convenables, on peut citer notamment : dialkyl, diaryl et aryl/alkyl péroxydes, hydropéroxydes, percarbonates, peresters, peracides et acyl peroxydes.

Comme exemples d'accélérateurs de décomposition (réducteurs) des peroxydes ou hydroperoxydes, on peut citer notamment : les amines tertiaires et/ou un ou plusieurs agents de réduction contenant des sels de métaux de transition, tels que les carboxylates de fer, de cobalt, de manganèse ou de vanadium.

Comme exemples de photoamorceurs convenables, on peut citer notamment les dérivés de : benzoïnes, éthers de benzoïne, acétophénones, benziles, cétals de benzile, anthraquinones, oxydes d'acylphosphine, alpha-hydroxycétones, phenylglyoxylates, alpha-aminocétones, benzophénones, thioxanthones, xanthones, dérivés de quinoxaline et les composés de triazine.

Comme exemples de photoamorceurs radicalaires particulièrement convenables, on peut citer notamment : 2-méthylanthraquinone, 2-éthylanthraquinone, 2-chloroanthraquinone, 2-benzylanthraquinone, 2-t-butylanthraquinone, 1,2-benzo-9,10-anthraquinone, benziles, benzoïnes, éthers de benzoïne, méthyl éther de benzoïne, éthyl éther de benzoïne, isopropyl éther de benzoïne, alpha-méthylbenzoïne, alpha-phénylbenzoïne, cétones de Michler, acétophénones, benzophénones, benzophénone, 4,4'-bis-(diéthylamino) benzophénone, acétophénone, 2,2-diéthoxyacétophénone, 4-éthoxyacétophénone, 2-isopropylthioxanthone, thioxanthone, diéthyl thioxanthone, 1,5-acétonaphthylène, éthyl-p-diméthylaminobenzoate, oxyde de 2,4,6-triméthylbenzoyldiphényl phosphine, 2,2-diméthoxy-1,2-diphényléthanone, 1-hydroxycyclohexyl phényl cétone, 2-méthyl-1-[4-(méthylthio) phényl]-2-morpholinopropanone-1, 2-hydroxy-2-méthyl-1-phényl-propanone, alpha-hydroxy cétone oligomérique, oxydes de benzoyl phosphine, oxyde de phenylbis(2,4,6-triméthylbenzoyl)phosphine, benzoate d'éthyl-4-diméthylamine, phosphinate d'éthyl(2,4,6-triméthylbenzoyl)phényle, anthraquinone, (benzène) tricarbonylchromium, benzile, isobutyl éther de benzoïne, dianhydride de 3,3',4,4'-benzophénone tetracarboxylique, 4-benzoylbiphényle, 2-benzyl-2-(diméthylamino)-4'morpholinobutyrophénone, 4,4'-bis(diéthylamino)benzophénone, 4,4'-bis(diméthylamino)benzophénone, camphorquinone, 2-chlorothioxanthèn-9-one, dibenzosubérénone, 4,4'-dihydroxybenzophénone, 2,2-diméthoxy-2-phenylacétophénone, 4-(diméthylamino)benzophénone, 4,4'-diméthylbenzile, 2,5-diméthylbenzophénone, 3,4-diméthylbenzophénone, 4'-ethoxyacetophenone, oxyde de 2,4,6-triméthylbenzoyldiphénylphophine, oxyde de phényl bis(2,4,6-triméthyl benzoyl)phosphine, ferrocène, 3'-hydroxyacétophénone, 4'-hydroxyacétophénone, 3-hydroxybenzophénone, 4-hydroxybenzophénone, 1-hydroxycyclohexyl phényl cétone, 2-hydroxy-2-méthylpropiophénone, 2-méthylbenzophénone, 3-méthylbenzophénone, méthybenzoylformate, 2-méthyl-4'(méthylthio)-2-morpholinopropiophénone, phénanthrènequinone, 4'-phénoxyacétophénone, (cumène)cyclopentadiényl hexafluorophosphate de fer(II), 9,10-diéthoxy et 9,10-dibutoxyanthracène, 2-éthyl-9,10-diméthoxyanthracène, thioxanthèn-9-one ou toute combinaison des amorceurs précédemment cités.

De préférence, la composition selon l'invention a une viscosité à 25°C selon méthode ISO 3219 (1993) inférieure à 5000 mPa.s et de préférence inférieure à 2500 mPa.s et plus préférentiellement inférieure à 1500 mPa.s. Plus particulièrement, après réticulation, elle a une HDT selon la méthode ISO 75 (2004) d'au moins 70°C et de préférence supérieure à 80°C. En particulier, aprèsréticulation, elle a un module de Young à 25°C selon la méthode ISO 527 (1995) d'au moins 1800 MPa, de préférence d'au moins 2000 MPa.

De préférence, la composition selon l'invention a un IR avant réticulation selon la norme ASTM 1218-02 d'au

moins 1,47, de préférence supérieur à 1,52 et plus particulièrement supérieur à 1,56 et après réticulation d'au moins 1,50 et de préférence supérieur à 1,55 et plus particulièrement supérieur à 1,59.

Un deuxième objet de l'invention concerne l'utilisation d'une composition selon l'invention pour la réalisation de revêtements ou de matériaux ayant une HDT selon la méthode ISO 75 (2004) d'au moins 70°C et de préférence supérieure à 80°C et/ou un IR d'au moins 1,50, de préférence supérieur à 1,55 et plus particulièrement supérieur à 1,59.

Plus particulièrement, ladite utilisation concerne des matériaux qui sont soit des articles imprimés en 3D, soit des matériaux différents des articles imprimés en 3D. Le terme « matériaux différents des articles imprimés en 3D » signifie ici des matériaux pour procédés d'injection/moulage (par définition, non imprimés). En effet, les compositions réticulables selon l'invention en dehors de l'impression 3D, visée en particulier, conviennent également pour la réalisation d'objets (articles) 3D par d'autres méthodes comme par exemple le moulage.

Selon une option préférée, ladite utilisation concerne des articles imprimés en 3D. Ces articles imprimés en 3D peuvent être imprimés par différents procédés, en particulier par un procédé d'impression couche par couche ou par un procédé en continu.

Un procédé d'impression 3D « couche par couche » comprend les étapes suivantes :

a) déposer sur une surface une première couche de composition réticulable selon l'invention,
b) réticuler ladite première couche, au moins partiellement, pour obtenir une première couche réticulée,
c) déposer sur ladite première couche réticulée, une seconde couche de composition réticulable selon l'invention,
d) réticuler ladite seconde couche, au moins partiellement, pour obtenir une seconde couche réticulée, laquelle est adhérée à la première couche réticulée ; et
e) répéter les étapes c) et d) le nombre de fois nécessaire à l'obtention de l'article 3D (ou tridimensionnel) final.

Les voies de réticulation utilisables sont celles déjà décrites ci-dessus avec une préférence particulière aux techniques de réticulation sous radiation actinique (UV, UV visible, proche UV visible ou sous faisceau d'électrons EB).

La composition réticulable de la présente invention peut également être utilisée dans des procédés de production d'objets (articles) tridimensionnels (3D) selon un procédé continu appelé aussi méthode ou procédé CLIP à partir de son nom en anglais : « Continuous Liquid Interface (or interphase) Product (or Printing) ». Ce type de procédé est décrit dans WO 2014/126830, WO 2014/126834 et WO 2014/126837 et dans Tumbleston et al., « Continuous Liquid Interface Production of 3D Objects », Science Vol. 347, Issue 6228, pp. 1349-1352 (March 20, 2015).

Le procédé CLIP procède par projection d'un film ou d'une séquence continue d'images par radiation actinique par exemple UV qui peuvent être générées par exemple, par une unité d'imagerie numérique, à travers une fenêtre transparente à ladite radiation actinique et perméable à l'oxygène (inhibiteur), située sous un bain de la composition réticulable (durcissable) maintenue sous forme liquide. Une interface liquide au-dessous de l'article (en croissance) est maintenue par la zone morte créée au-dessus de la fenêtre. L'article solide durci est extrait en continu du bain de composition réticulable au-dessus de la zone morte, qui peut être régénéré en introduisant dans le bain des quantités supplémentaires de la composition réticulable pour compenser les quantités de composition réticulable durcies et incorporées dans l'article en croissance.

Par exemple, un procédé d'impression d'un article tridimensionnel utilisant la composition réticulable de l'invention peut comprendre au moins les étapes suivantes :

a) fournir un support (ou plateau d'impression) et un élément optiquement transparent ayant une surface de construction, le support et la surface de construction définissant entre eux une région de construction,
b) remplir ladite région de construction avec la composition réticulable selon l'invention,
c) irradier de façon continue ou intermittente ladite région de construction avec une radiation actinique, pour former à partir de la composition réticulable une composition réticulée, et
d) continuellement ou de manière intermittente, éloigner ledit support de la surface de construction pour former l'article tridimensionnel (3D) avec la composition réticulée.

Plus particulièrement, le procédé continu d'impression (type CLIP) peut comprendre les étapes suivantes : (a) fournir un support (ou plateau d'impression) et une fenêtre de construction stationnaire, la fenêtre de construction comprenant un élément semi-perméable, ledit élément semi-perméable comprenant une surface de construction et une surface d'alimentation séparée de la surface de construction avec ladite surface de construction et ledit support (ou plateau d'impression) définissant entre eux une région de construction et avec la surface d'alimentation en contact liquide avec un inhibiteur de polymérisation, (b) ensuite et en même temps et/ou séquentiellement, remplir la région de construction avec une composition réticulable selon l'invention avec ladite composition étant en contact avec le plateau d'impression, (c) irradier la région de construction à travers la fenêtre de construction pour produire une région polymérisée solide dans la région de construction avec une couche restante de film liquide constituée de la composition durcissable, formée entre la région polymérisée solide et la fenêtre de construction, la polymérisation du film liquide

étant inhibée par l'inhibiteur de polymérisation et (d) éloigner le plateau d'impression, sur lequel est adhérée la région polymérisée, de la surface de construction de la fenêtre stationnaire afin de créer une région de construction entre la région polymérisée et la fenêtre de construction stationnaire. En général, le procédé inclut l'étape (e) la répétition et/ou la poursuite des étapes de (b) à (d) pour produire ensuite une région polymérisée adhérée à une région précédemment polymérisée jusqu'à ce que le dépôt en continu ou répété de régions polymérisées adhérées les unes aux autres forme l'article tridimensionnel visé.

Les articles imprimés en 3D obtenus par l'utilisation de la composition réticulable (durcissable) selon l'invention ont, en particulier, pour les applications optiques, un indice de réfraction IR d'au moins 1,50, de préférence supérieur à 1,55 et plus particulièrement supérieur à 1,59.

Plus particulièrement, les applications optiques visées sont pour : lentilles plastiques, en particulier lentilles pour verres ophtalmiques, lentilles pour caméras numériques, lentilles pour prismes optiques ou revêtements optiques parmi sur-revêtements ('over-coatings') optiques, revêtements optiques durs ou films antireflets ou pour revêtements de LED ou de cellules solaires (photovoltaïques) ou fibres optiques, hologrammes, lentilles pour prisme et matériaux LED.

Un autre objet faisant également partie de la présente invention concerne une composition réticulée, laquelle résulte de la réticulation d'au moins une composition telle que définie ci-haut selon l'invention.

Finalement, la présente invention couvre également un produit fini, lequel résulte de la réticulation d'au moins une composition telle que définie selon l'invention ou lequel comprend au moins une composition réticulée telle que définie ci-avant.

Ledit produit fini est en particulier un revêtement, un matériau moulé, par exemple composite, un article imprimé 3D.

Plus particulièrement, ledit produit fini est un article imprimé en 3D et de préférence sélectionné parmi : lentilles plastiques, en particulier lentilles pour verres ophtalmiques, lentilles pour caméras numériques, lentilles pour prismes optiques ou revêtements optiques parmi sur-revêtements ('over-coatings') optiques, revêtements optiques durs ou films antireflets ou pour revêtements de LED ou de cellules solaires (photovoltaïques) ou fibres optiques, hologrammes, lentilles pour prisme et matériaux LED.

Les exemples suivants sont donnés à titre d'illustration de l'invention et de ses performances et ne limitent en rien sa couverture, celle-ci étant définie par les revendications.

## EXEMPLES

### 1) Formulations

Les compositions des formulations testées selon exemples 1 à 5, sont présentées au tableau 1 ci-dessous à partir de composants suivants :

Composé A : SR833S, Sartomer, Tricyclodécanediméthanol diacrylate
Composé B : Tétrabromo Bisphénol A diglycidyl éther diméthacrylate
Composé C : Tétrabromo Bisphénol A diglycidyl éther tétraméthacrylate
Composé D : Biphényl glycidyl éther diméthacrylate
Composé E : SR348L de Sartomer, Bisphénol A diméthacrylate éthoxylée (2)
Composé F : HPMA de Evonik, Hydroxypropylméthacrylate
Composé G : H008 de KPX Green Chemical, biphénylméthanol acrylate

Tableau 1 : Compositions des formulations testées des exemples 1 à 5

| Composant | Exemple 1 | Exemple 2 | Exemple 3 | Exemple 4 | Exemple 5 |
|---|---|---|---|---|---|
| A | 14,0 | / | / | 13,30 | / |
| B | 27,0 | 12,50 | 13,20 | 25,65 | / |
| C | 27,0 | 29,25 | 30,85 | 25,65 | 42,75 |
| D | / | / | / | / | 23,75 |
| E | / | 16.75 | 17.70 | / | / |
| F | / | 10,0 | 5,0 | 5,0 | 5,0 |
| G | 32,0 | 31,5 | 33,25 | 30,40 | 28,50 |

(suite)

| Composant | Exemple 1 | Exemple 2 | Exemple 3 | Exemple 4 | Exemple 5 |
|---|---|---|---|---|---|
| Total : | 100,0 | 100,0 | 100,0 | 100,0 | 100,.0 |

2) **Caractéristiques des formulations liquides, avant réticulation**

Ces caractéristiques sont présentées au tableau 2 ci-dessous.

Tableau 2 : Caractéristiques des formulations testées des exemples 1 à 5

| | Exemple 1 | Exemple 2 | Exemple 3 | Exemple 4 | Exemple 5 |
|---|---|---|---|---|---|
| Indice de réfraction | 1,578 | 1,565 | 1,572 | 1,570 | 1,575 |
| Viscosité Brookfield @25°C (mPa.s) | 3200 | 750 | 1440 | 1880 | 1150 |
| Coloration (Gardner) | 1,6 | 1,3 | 1,2 | 1,5 | 1,2 |

**3) Caractéristiques physico-chimiques après réticulation**

**Echantillons**

Les échantillons sont préparés à partir de moules en silicone. Les barreaux (DMA, HDT, Flexion 3 points) ont pour dimension, en mm, 80*10*4 et les éprouvettes type 5A pour la traction 4mm d'épaisseur. Le système de photoamorceur est le TPO-L, 2% pour toutes les formules et la réticulation réalisée sous lame LED banc UV 100% suivie d'une Post-Cuisson de 12 heures à 80°C.

**Conditions d'analyses:**

Tests réalisés à 23°C sous une humidité relative de50%.

- Analyse DMA :

L'analyse DMA est réalisée sur un appareil RDAIII (Rheometrics), en torsion rectangulaire, avec un balayage de -50°C à 200°C, à 3°C/min et une déformation nominale de 0.05% et d'une fréquence de 1 Hz.

- HDT (Norme ISO 75 de 2004) :

Les essais de HDT (Heat Deflection Temperature) sont réalisés sur l'appareil HDT (EDIT). La méthode A est utilisée (1,8 MPa), l'éprouvette (4 mm d'épaisseur) est disposée à plat sur le support (distance entre appuis = 64 mm). La vitesse de chauffe est de 120°C/h.

- Test de traction :

Les essais de traction sont réalisés sur machine de traction MTS cellule 500N. Les éprouvettes utilisées sont de Type 5A. La vitesse de traction est de 1 mm/min, puis 10 mm/min à partir de 7% d'allongement.

- Flexion 3 points (Norme ISO 178 de 2001)

Les essais de flexion 3 points sont réalisés sur machine de traction MTS en mode flexion 3 points dont la distance entre appuis est de 16 x l'épaisseur moyenne du lot. La vitesse d'essai est de 1 mm/min.

**Résultats**

Les résultats des performances des formulations testées des exemples 1 à 5 sont présentées au tableau 3 ci-dessous.

Tableau 3 : performances des formulations testées des exemples 1 à 5

| | Exemple 1 | Exemple 2 | Exemple 3 | Exemple 4 | Exemple 5 |
|---|---|---|---|---|---|
| **DMA (°C)** | 121 | 114 | 119 | 118 | 114 |
| **HDT (°C)** | 86 | 93 | 86 | 95 | 94 |
| **Traction** | | | | | |
| Contrainte (MPa) | 31,3+/-3,5 | 30+/-6 | 30+/-6 | 30+/-8 | 25+/-8 |
| Elongation rupture (%) | 1,5+/-0,1 | 1,6+/-0,5 | 1,7+/-0,5 | 1,4+/-0,5 | 1,1+/-0.3 |
| Module (MPa) | 2800+/-170 | 3100+/-160 | 3300+/-200 | 3000+/-150 | 2800+/-140 |
| **Flexion 3 points** | | | | | |
| Contrainte (MPa) | 79+/-0,4 | 91+/-1 | 81+/-10 | 82+/-11 | 55+/-18 |
| Flèche à la rupture (mm) | 3,7+/-0,2 | 5,1+/-0,1 | 4,3+/-0,6 | 4,2+/-0,5 | 2.1+/-0.7 |
| Module (MPa) | 3775+/-64 | 3527+/-150 | 3474+/-118 | 3494+/-143 | 4100+/-100 |

## Revendications

1. Composition réticulable, **caractérisée en ce qu'**elle comprend un composant a) au moins un tétra(méth)acrylate de diglycidyle éther de bisphénol A halogéné et un composant b) au moins un diluant parmi les mono(méth)acrylates d'un monoalcool comprenant une structure biphényle, ledit biphényle étant optionnellement halogéné,
et en option, au moins un composant choisi parmi les composants c), d), e), f) et g) tels que définis comme suit ou leurs combinaisons :

   c) au moins un oligomère (méth)acrylé porteur d'au moins 4 fonctions (méth)acrylates par chaîne, ledit oligomère comprenant au moins 2 unités de structure bisphénol A halogéné dans ladite chaîne oligomère,
   d) au moins un di(méth)acrylate d'un dérivé époxydé de biphényle, optionnellement ledit biphényle étant halogéné,
   e) un di(méth)acrylate du diglycidyle éther de bisphénol A optionnellement halogéné,
   f) au moins un monomère différent de a), b), d) et e),
   g) au moins un oligomère parmi uréthane (méth)acrylate, polyester (méth)acrylate et polyéther (méth)acrylate.

2. Composition selon la revendication 1, **caractérisée en ce que** ledit oligomère tel que défini selon c) comprend 2 unités de structure bisphénol A halogéné dans ladite chaîne oligomère.

3. Composition selon la revendication 1 ou 2, **caractérisée en ce que** ledit di(méth)acrylate de dérivé époxydé de biphényle tel que défini selon d) est le di(méth)acrylate du 2-biphénylyle glycidyle éther.

4. Composition selon l'une des revendications 1 à 3, **caractérisée en ce que** ledit monomère tel que défini selon f) a une fonctionnalité en (méth)acrylates allant de 1 à 6 et de préférence est sélectionné parmi les esters mono(méth)acryliques d'alcools aliphatiques en C1 à C18 ou d'alcools cycloaliphatiques en C6 à C18 ou parmi les esters (méth)acryliques multifonctionnels (de fonctionnalité 2 à 6) de polyols en C2 à C18, en particulier esters (méth)acryliques multifonctionnels de polyols en C3 à C18 ou parmi les hydroxy alkyl (méth)acrylates, en particulier parmi les hydroxy C2-C6 alkyl (méth)acrylates, les époxy(méth)acrylates, les aminoacrylates et les uréthane (méth)acrylates, et en option ledit monomère f) comprend au moins une unité de structure alkoxy.

5. Composition selon l'une des revendications 1 à 4, **caractérisée en ce que** ledit composant a) est le tétraméthacrylate de diglycidyle éther de bisphénol A tétrabromé de formule suivante (I) :

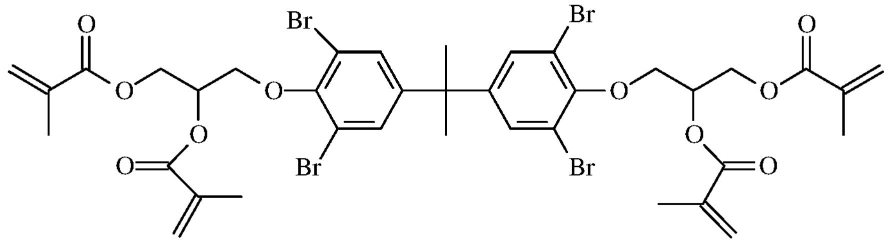

(I)

6. Composition selon l'une des revendications 1 à 5, **caractérisée en ce que** le composant b) est le mono(méth)acrylate de biphényle méthanol de formule suivante (II) :

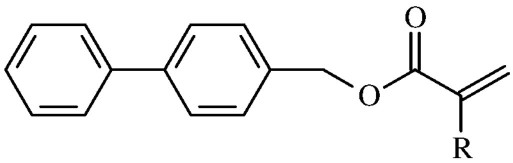

(II)

avec R étant méthyle ou H, de préférence H.

7. Composition selon l'une des revendications 1 à 6, **caractérisée en ce que** ledit oligomère tel que défini selon c) est de formule suivante (III) :

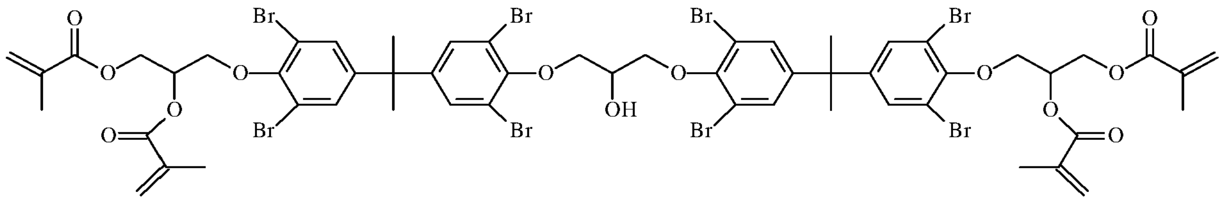

(III)

8. Composition selon l'une des revendications 1 à 7, **caractérisée en ce que** ledit monomère d) est le diméthacrylate du 2-biphénylyle glycidyle éther comme défini selon la formule suivante (IVc) :

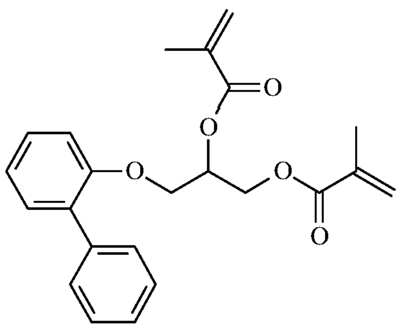

(IVc)

9. Composition selon l'une des revendications 1 à 8, **caractérisée en ce que** le taux en poids du composant a) par rapport au poids a) + b) varie de 20 à 80%, de préférence de 35 à 65%.

10. Utilisation d'une composition selon l'une des revendications 1 à 9 pour la réalisation de revêtements ou de matériaux ayant une HDT selon la méthode ISO 75 (2004) après réticulation, d'au moins 70°C et de préférence supérieure à 80°C et/ou un IR selon la norme ASTM 1218-02 après réticulation, d'au moins 1,50, de préférence supérieur à 1,55 et plus particulièrement supérieur à 1,59.

11. Utilisation selon la revendication 10, **caractérisée en ce que** lesdits matériaux sont des articles imprimés en 3D

ou des matériaux différents des articles imprimés 3D.

12. Utilisation selon la revendication 10 ou 11, **caractérisée en ce qu'**elle concerne des applications optiques et de préférence pour :

- lentilles plastiques, en particulier lentilles pour verres ophtalmiques, lentilles pour caméras numériques, lentilles pour prismes optiques ou
- revêtements optiques parmi sur-revêtements ('over-coatings') optiques, revêtements optiques durs ou films antireflets ou pour revêtements de LED ou de cellules solaires (photovoltaïques) ou
- fibres optiques, hologrammes, lentilles pour prisme et matériaux LED.

13. Composition réticulée, **caractérisée en ce qu'**elle résulte de la réticulation d'au moins une composition telle que définie selon l'une des revendications 1 à 9.

14. Produit fini, **caractérisé en ce qu'**il résulte de la réticulation d'au moins une composition telle que définie selon l'une des revendications 1 à 9 ou **en ce qu'**il comprend au moins une composition réticulée telle que définie selon la revendication 13.

15. Produit fini selon la revendication 14, **caractérisé en ce qu'**il s'agit d'un revêtement, d'un matériau moulé, en particulier composite ou d'un article imprimé en 3D, de préférence un article imprimé en 3D sélectionné parmi :

- lentilles plastiques, en particulier lentilles pour verres ophtalmiques, lentilles pour caméras numériques, lentilles pour prismes optiques ou
- revêtements optiques parmi sur-revêtements ('over-coatings') optiques, revêtements optiques durs ou films antireflets ou pour revêtements de LED ou de cellules solaires (photovoltaïques) ou

fibres optiques, hologrammes, lentilles pour prisme et matériaux LED.

## Patentansprüche

1. Vernetzbare Zusammensetzung, **dadurch gekennzeichnet, dass** sie als eine Komponente a) mindestens ein halogeniertes Bisphenol-A-diglycidylethertetra(meth)acrylat und als eine Komponente b) mindestens ein Verdünnungsmittel der Mono(meth)acrylate eines eine Biphenylstruktur umfassenden Monoalkohols umfasst, wobei das Biphenyl gegebenenfalls halogeniert ist,
und optional mindestens eine Komponente umfasst, die aus den wie folgt definierten Komponenten c), d), e), f) und g) oder ihren Kombinationen ausgewählt ist:

c) mindestens einem (meth)acrylierten Oligomer mit mindestens 4 (Meth)Acrylatfunktionen pro Kette, wobei das Oligomer in der Oligomerkette mindestens 2 halogenierte Bisphenol-A-Struktureinheiten umfasst,
d) mindestens einem Di(meth)acrylat eines epoxidierten Biphenylderivats, wobei das Biphenyl gegebenenfalls halogeniert ist,
e) einem gegebenenfalls halogenierten Bisphenol-A-diglycidyletherdi(meth)acrylat,
f) mindestens einem von a), b), d) und e) verschiedenen Monomer,
g) mindestens einem der Oligomere Urethan(meth)acrylat, Polyester(meth)acrylat und Polyether(meth)acrylat.

2. Zusammensetzung nach Anspruch 1, **dadurch gekennzeichnet, dass** das Oligomer gemäß der Definition in c) in der Oligomerkette 2 halogenierte Bisphenol-A-Struktureinheiten umfasst.

3. Zusammensetzung nach Anspruch 1 oder 2, **dadurch gekennzeichnet, dass** das Di(meth)acrylat des epoxidierten Biphenylderivats gemäß der Definition in d) 2-Biphenylylglycidyletherdi(meth)acrylat ist.

4. Zusammensetzung nach einem der Ansprüche 1 bis 3, **dadurch gekennzeichnet, dass** das das Monomer gemäß der Definition in f) eine (Meth)Acrylat-Funktionalität von 1 bis 6 aufweist und vorzugsweise aus Mono(meth)acrylsäureestern von aliphatischen C1- bis C18-Alkoholen oder cycloaliphatischen C6- bis C18-Alkoholen oder aus multifunktionellen (Meth)Acrylsäureestern (mit einer Funktionalität von 2 bis 6) von C2- bis C18-Polyolen, insbesondere multifunktionellen (Meth)Acrylsäureestern von C3- bis C18-Polyolen oder aus Hydroxyalkyl(meth)acrylaten, insbesondere aus Hydroxy-C2-C6-alkyl(meth)acrylaten, Epoxy(meth)acrylaten, Aminoacrylaten und Urethan(meth)acrylaten ausgewählt ist und das Monomer f) optional mindestens eine Alkoxy-Struktureinheit umfasst.

5. Zusammensetzung nach einem der Ansprüche 1 bis 4, **dadurch gekennzeichnet, dass** es sich bei der Komponente a) um das tetrabromierte Bisphenol-A-diglycidylethertetramethacrylat der folgenden Formel (I) handelt:

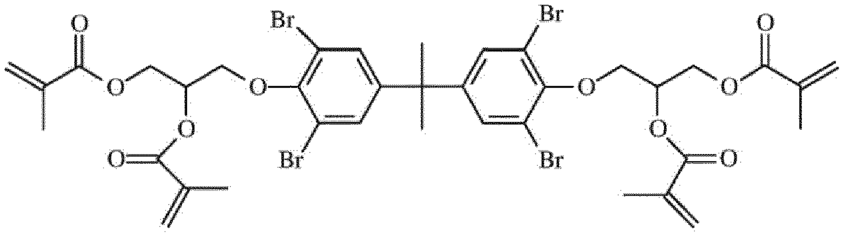

(I)

6. Zusammensetzung nach einem der Ansprüche 1 bis 5, **dadurch gekennzeichnet, dass** es sich bei der Komponente b) um das Biphenylmethanolmono(meth)acrylat der folgenden Formel (II) handelt:

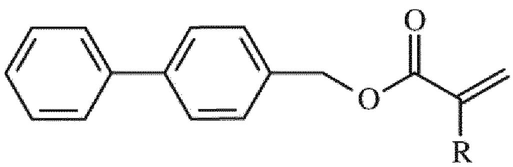

(II)

wobei R Methyl oder H, vorzugsweise H, ist.

7. Zusammensetzung nach einem der Ansprüche 1 bis 6, **dadurch gekennzeichnet, dass** das Oligomer gemäß der Definition in c) die folgende Formel (III) aufweist:

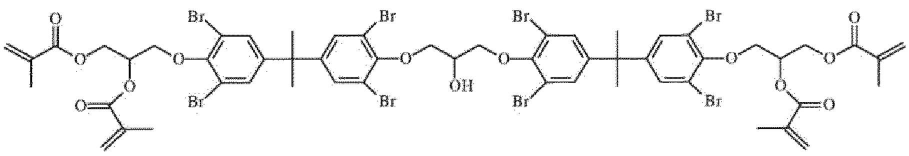

(III)

8. Zusammensetzung nach einem der Ansprüche 1 bis 7, **dadurch gekennzeichnet, dass** es sich beim Monomer d) um das 2-Biphenylylglycidyletherdimethacrylat gemäß der Definition in der folgenden Formel (IVc) handelt:

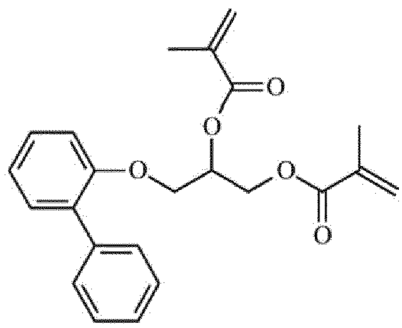

(IVc) .

9. Zusammensetzung nach einem der Ansprüche 1 bis 8, **dadurch gekennzeichnet, dass** der Gewichtsanteil der Komponente a) in Bezug auf das Gewicht a) + b) von 20 bis 80 %, vorzugsweise von 35 bis 65 %, variiert.

10. Verwendung einer Zusammensetzung nach einem der Ansprüche 1 bis 9 zur Herstellung von Beschichtungen oder Materialien mit einer HDT gemäß dem Verfahren ISO 75 (2004) nach der Vernetzung von mindestens 70 °C und vorzugsweise mehr als 80 °C und/oder einem IR gemäß der Norm ASTM 1218-02 nach der Vernetzung von mindestens 1,50, vorzugsweise mehr als 1,55 und noch mehr bevorzugt von mehr als 1,59.

11. Verwendung nach Anspruch 10, **dadurch gekennzeichnet, dass** es sich bei den Materialien um 3D-Druckartikel oder von 3D-Druckartikeln verschiedene Materialien handelt.

12. Verwendung nach Anspruch 10 oder 11, **dadurch gekennzeichnet, dass** sie optische Anwendungen und vorzugsweise für Folgendes betrifft:

- Kunststofflinsen, insbesondere Linsen für ophthalmische Gläser, Linsen für Digitalkameras, Linsen für optische Prismen oder
- optische Beschichtungen von den optischen Überbeschichtungen (’Overcoatings’), harten optischen Beschichtungen oder reflexmindernden Filmen oder für LED- oder Solarzellen- (Photovoltaik-)Beschichtungen oder
- Lichtleitfasern, Hologramme, Prismenlinsen und LED-Materialien.

13. Vernetzte Zusammensetzung, **dadurch gekennzeichnet, dass** sie aus der Vernetzung mindestens einer Zusammensetzung gemäß der Definition in einem der Ansprüche 1 bis 9 resultiert.

14. Endprodukt, **dadurch gekennzeichnet, dass** es aus der Vernetzung mindestens einer Zusammensetzung gemäß der Definition in einem der Ansprüche 1 bis 9 resultiert oder dadurch, dass es mindestens eine vernetzte Zusammensetzung gemäß der Definition in Anspruch 13 umfasst.

15. Endprodukt nach Anspruch 14, **dadurch gekennzeichnet, dass** es sich um eine Beschichtung, einen Formgegenstand, insbesondere einen Verbundwerkstoff oder um einen 3D-Druckartikel, vorzugsweise um einen 3D-Druckartikel handelt, der ausgewählt ist aus:

- Kunststofflinsen, insbesondere Linsen für ophthalmische Gläser, Linsen für Digitalkameras, Linsen für optische Prismen oder
- optische Beschichtungen von den optischen Überbeschichtungen (’Overcoatings’), harten optischen Beschichtungen oder reflexmindernden Filmen oder für LED- oder Solarzellen- (Photovoltaik-)Beschichtungen oder
- Lichtleitfasern, Hologramme, Prismenlinsen und LED-Materialien.

## Claims

1. Crosslinkable composition, **characterized in that** it comprises a component a) at least one halogenated bisphenol A diglycidyl ether tetra(meth)acrylate and a component b) at least one diluent from mono(meth)acrylates of a monoalcohol comprising a biphenyl structure, the said biphenyl optionally being halogenated,
and optionally at least one component chosen from the components c), d), e), f) and g) as defined as follows or their combinations:

c) at least one (meth)acrylated oligomer carrying at least 4 (meth)acrylate functional groups per chain, the said oligomer comprising at least 2 units of halogenated bisphenol A structure in the said oligomer chain,
d) at least one di(meth)acrylate of an epoxidized biphenyl derivative, the said biphenyl optionally being halogenated,
e) an optionally halogenated bisphenol A diglycidyl ether di(meth)acrylate,
f) at least one monomer other than a), b), d) and e),
g) at least one oligomer from urethane (meth)acrylate, polyester (meth)acrylate and polyether (meth)acrylate.

2. Composition according to Claim 1, **characterized in that** the said oligomer as defined according to c) comprises 2 units of halogenated bisphenol A structure in the said oligomer chain.

3. Composition according to Claim 1 or 2, **characterized in that** the said epoxidized biphenyl derivative di(meth)acrylate as defined according to d) is 2-biphenylyl glycidyl ether di(meth)acrylate.

4. Composition according to one of Claims 1 to 3, **characterized in that** the said monomer as defined according to f) has a functionality of (meth)acrylates ranging from 1 to 6 and is preferably selected from mono(meth)acrylic esters of C1 to C18 aliphatic alcohols or of C6 to C18 cycloaliphatic alcohols or from polyfunctional (meth)acrylic esters (of functionality 2 to 6) of C2 to C18 polyols, in particular polyfunctional (meth)acrylic esters of C3 to C18 polyols, or from hydroxyalkyl (meth)acrylates, in particular from hydroxy(C2-C6 alkyl) (meth)acrylates, epoxy (meth)acrylates, aminoacrylates and urethane (meth)acrylates and optionally the said monomer f) comprises at least one unit of

alkoxy structure.

5. Composition according to one of Claims 1 to 4, **characterized in that** the said component a) is tetrabrominated bisphenol A diglycidyl ether tetramethacrylate of following formula (I):

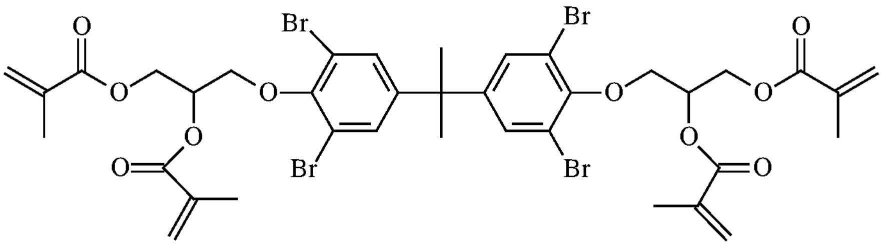

(I)

6. Composition according to one of Claims 1 to 5, **characterized in that** the component b) is biphenylmethanol mono(meth)acrylate of following formula (II):

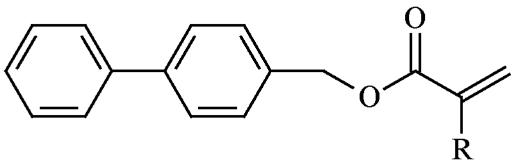

(II)

with R being methyl or H, preferably H.

7. Composition according to one of Claims 1 to 6, **characterized in that** the said oligomer as defined according to c) is of following formula (III):

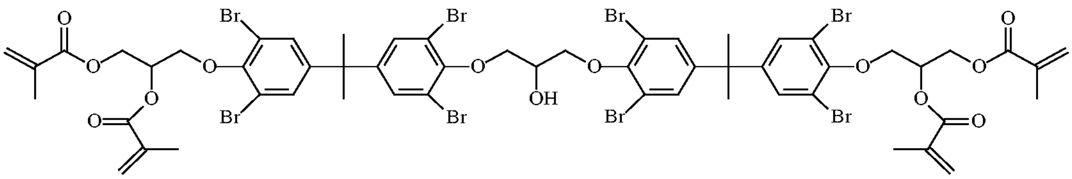

(III)

8. Composition according to one of Claims 1 to 7, **characterized in that** the said monomer d) is 2-biphenylyl glycidyl ether dimethacrylate as defined according to the following formula (IVc):

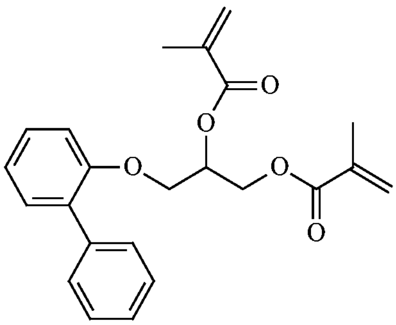

(IVc) .

9. Composition according to one of Claims 1 to 8, **characterized in that** the content by weight of the component a), with respect to the weight a) + b), varies from 20% to 80%, preferably from 35% to 65%.

10. Use of a composition according to one of Claims 1 to 9 for the preparation of coatings or of materials having an

HDT according to the ISO 75 (2004) method after crosslinking of at least 70°C and preferably of greater than 80°C and/or an RI according to the ASDM 1218-02 standard after crosslinking of at least 1.50, preferably of greater than 1.55 and more particularly of greater than 1.59.

**11.** Use according to Claim 10, **characterized in that** the said materials are 3D printed articles or materials different from 3D printed articles.

**12.** Use according to Claim 10 or 11, **characterized in that** it relates to optical applications and preferably for:

- plastic lenses, in particular lenses for ophthalmic glasses, lenses for digital cameras or lenses for optical prisms, or
- optical coatings among optical overcoatings, hard optical coatings or anti-reflective films or for coatings of LED or of solar (photovoltaic) cells, or
- optical fibres, holograms, lenses for prisms and LED materials.

**13.** Crosslinked composition, **characterized in that** it results from the crosslinking of at least one composition as defined according to one of Claims 1 to 9.

**14.** Finished product, **characterized in that** it results from the crosslinking of at least one composition as defined according to one of Claims 1 to 9 or **in that** it comprises at least one crosslinked composition as defined according to Claim 13.

**15.** Finished product according to Claim 14, **characterized in that** it is a coating, a moulded material, in particular a composite material, or a 3D printed article, preferably a 3D printed article selected from:

- plastic lenses, in particular lenses for ophthalmic glasses, lenses for digital cameras or lenses for optical prisms, or
- optical coatings among optical overcoatings, hard optical coatings or anti-reflective films or for coatings of LED or of solar (photovoltaic) cells, or
- optical fibres, holograms, lenses for prisms and LED materials.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 2586802 B1
- EP 2664635 B1
- EP 2684903 B1
- US 6515166 B
- WO 2014126830 A
- WO 2014126834 A
- WO 2014126837 A


### Littérature non-brevet citée dans la description


- **TUMBLESTON et al.** Continuous Liquid Interface Production of 3D Objects. *Science,* 20 Mars 2015, vol. 347 (6228), 1349-1352